# EUROPÄISCHE PATENTANMELDUNG

(11) **EP 2 080 915 A2**
(43) Veröffentlichungstag der Anmeldung: **22.07.2009**
(21) Anmeldenummer: 08021572.6
(22) Anmeldetag: 12.12.2008
(51) Int. Cl.: F16B 19/08

(54) **Stanzniet**

(30) Priorität: 15.01.2008 DE 102008004299
(71) Anmelder: Bayerische Motoren Werke Aktiengesellschaft, 80809 München (DE)
(72) Erfinder: Reinstettel, Marc, 81539 München (DE)

(57) **Zusammenfassung**

Ein Stanzniet mit einem Nietkopf (1) und einem zumindest teilweise hohlzylindrischen Nietschaft (2), der einen im Querschnitt ringförmigen Nietfuß ausbildet, der durch die Ausbildung einer Nietfußinnenfase (4) in eine Nietfußstirnfläche (5) ausläuft, und bei dem der Übergang von dem Nietschaft (2) in den Nietkopf (1) durch einen Unterkopfradius (R₁) und eine Unterkopffase (3) ausgebildet ist, ist dadurch gekennzeichnet, dass die Nietfußwandstärke mindestens 40 % und vorzugsweise zwischen 40 % und 50 % des Nietfußaußenradius und die Breite der Nietfußstirnfläche maximal 10 % und vorzugsweise zwischen 8 % und 9 % der Nietfußwandstärke beträgt.

## Beschreibung

Die vorliegende Erfindung betrifft einen Stanzniet.

Die Verwendung von Stanznieten als Verbindungselemente ist aus den unterschiedlichsten technischen Bereichen bekannt. In der Automobilindustrie kommt das Stanznieten insbesondere dort zum Einsatz, wo Blechbauteile, insbesondere solche der Karosserie, unlösbar miteinander verbunden werden sollen, diese jedoch nicht miteinander verschweißt werden können.

Ein wichtiger Parameter für den Fügevorgang sowie die Verbindungsqualität der Stanznietverbindung ist die Geometrie des Stanzniets selbst.

Die DE 43 33 052 C2 offenbart einen Stanzniet, der üblicherweise als C-Niet bezeichnet wird, und sich für das Stanznieten von Aluminiumblechen mit Aluminiumblechen beziehungsweise von Aluminiumblechen mit Stahlblechen bewährt hat. Die spezielle Nietgeometrie des C-Niets, die sich insbesondere durch einen teilkreisförmigen Übergang zwischen dem Nietschaft und dem Nietkopf sowie einem ebenfalls im Querschnitt teilkreisförmigen Grund der Schaftbohrung auszeichnet, weist jedoch Schwächen beim Stanznieten von hochfesten Stahlblechen auf. So bedingt beispielsweise der teilkreisförmige Übergang zwischen dem Nietkopf und dem Nietschaft in Verbindung mit dem gegenüber Aluminium deutlich verringerten Fließverhalten von hochfestem Stahl die Ausbildung eines relativ großen Spalts zwischen dem Oberblech und der Unterseite des Nietkopfs eines gesetzten C-Niets. Ein großer Spalt ist jedoch aus Korrosionsschutzgründen zu vermeiden.

Aus der DE 10 2005 052 360 A1 ist ein Stanzniet bekannt, dessen Geometrie für ein Stanznieten von zwei hochfesten Stahlblechen optimiert wurde. Um den angesprochenen großen Spalt zwischen einem Oberblech einer Stanznietverbindung aus hochfestem Stahl und der Unterseite des Nietkopfs zu vermeiden wurde der in der DE 10 2005 052 360 A1 offenbarte Stanzniet, der allgemein auch als HD-Niet bezeichnet wird, gegenüber dem C-Niet derart abgeändert, dass der Übergang zwischen dem Nietkopf und dem Nietschaft im Wesentlichen durch eine Unterkopffase (d.h. mit einem im Querschnitt geradlinigen Verlauf) ausgebildet und der Übergang dieser Unterkopfphase in den Nietschaft lediglich durch einen sehr kleinen Radius gekennzeichnet ist. Diese Ausgestaltung des Übergangs zwischen Nietkopf und Nietschaft zeigt eine deutliche Verbesserung hinsichtlich des sich einstellenden Spalts zwischen dem Nietkopf und dem Oberblech der Stanznietverbindung. Weiterhin wurde bei dem HD-Niet der DE 10 2005 052 360 A1 versucht, die Geometrie des Nietfußes für ein Durchstanzen des Oberblechs aus hochfestem Stahl zu optimieren.

Obwohl sich der aus der DE 10 2005 052 360 A1 bekannte HD-Niet als ein für das Stanznieten von zwei hochfesten Stahlblechen geeigneter Stanzniet bewährt hat, zeigt dieser bei einer Verwendung zum Stanznieten eines Oberblechs aus hochfestem Stahl sowie eines Unterblechs aus Aluminium und insbesondere Aluminiumguss deutliche Schwächen auf.

Ausgehend von diesem Stand der Technik liegt der Erfindung daher die Aufgabe zugrunde, einen Stanzniet zu schaffen, der insbesondere bei einer Verbindung eines hochfesten Stahlblechs mit einem Aluminiumblech eine verbesserte Verbindungsqualität gewährleistet.

Diese Aufgabe wird durch einen Stanzniet gemäß dem Patenanspruch 1 gelöst. Vorteilhafte Ausführungsformen dieses Stanzniets sind Gegenstand der abhängigen Patentansprüche.

Der erfindungsgemäße Stanzniet zeichnet sich gegenüber dem aus der DE 10 2005 52 360 A1 bekannten HD-Niet insbesondere durch eine geänderte Dimensionierung der Nietfußwandstärke sowie der Breite der Nietfußstirnfläche und insbesondere durch ein definiertes Verhältnis dieser zwei Werte zueinander aus, durch die eine deutliche Verbesserung der Verbindungsqualität beim Stanznieten eines hochfesten Stahlblechs mit einem Aluminiumblech erzielt werden kann.

Die Nietfußwandstärke ist als Differenz des Nietfußaußenradius an einer Position des Nietschafts und des entsprechenden Nietfußinnenradius definiert und kann sich in Längsrichtung des Nietschafts ändern.

Als Nietfußstirnfläche wird vorliegend die endseitige Stirnfläche des Nietschafts verstanden, die für den Stanznietvorgang in Kontakt mit dem Oberblech der zu verbindenden Bleche gebracht wird.

Der erfindungsgemäße Stanzniet, der einen Nietkopf und einen zumindest teilweise hohlzylindrischen Nietschaft aufweist, wobei der Nietschaft einen im Querschnitt ringförmigen Nietfuß ausbildet, der durch die Ausbildung einer Nietfußinnenphase oder einen Nietfußinnenradius in eine Nietfußstirnfläche ausläuft und bei dem der Übergang von dem Nietschaft in den Nietkopf durch einen Unterkopfradius und eine Unterkopfphase ausgebildet ist, ist zum einen durch eine Nietfußwandstärke gekennzeichnet, die mindestens 40 % und vorzugsweise zwischen 40 % und 50 % und besonders bevorzugt 45 % des Nietfußaußenradius beträgt; weiterhin ist der erfindungsgemäße Stanzniet durch eine Breite der Nietfußstirnfläche gekennzeichnet, die maximal 10 % und vorzugsweise zwischen 8 % und 9 % und besonders bevorzugt 8,5 % der Nietfußwandstärke beträgt.

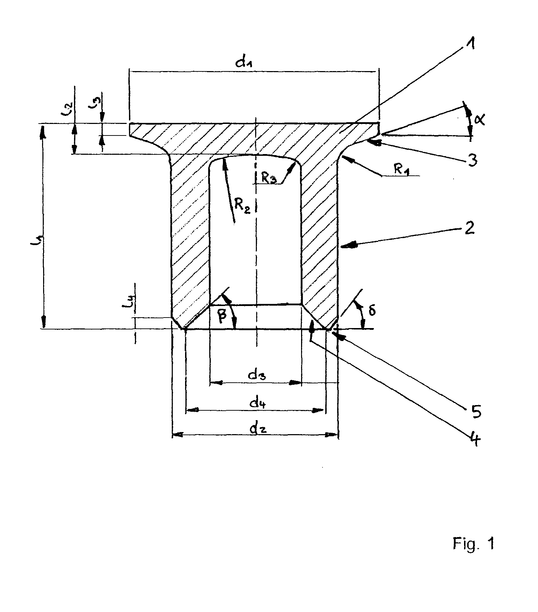

Durch die erfindungsgemäße Dimensionierung des Nietfußes kann zum einen ein gutes Stanzverhalten durch ein Oberblech aus hochfestem Stahl erzielt werden; dies kann insbesondere auf die im Gegensatz zu dem aus der DE 10 2005 052 360 A1 bekannten Stanzniet deutlich verringerte relative Breite der Nietfußstirnfläche im Bezug zu der Nietfußwandstärke zurückgeführt werden. Diese beträgt in dem Ausführungsbeispiels der Fig. 1 der DE 10 2005 052 360 A1 noch ca. 37 %. Weiterhin kann durch die relative große Nietfußwandstärke des erfindungsgemäßen Stanzniets ein ungewolltes Aufstauchen des Nietfußes verhindert werden. In dem Ausführungsbeispiels der Fig. 1 der DE 10 2005 052 360 A1 beträgt die relative Nietfußwandstärke lediglich ca. 35 % des Nietfußaußenradius. Gleichzeitig kann durch das erfindungsgemäße Verhältnis von Nietfußwandstärke zu Nietfußstirnfläche ein weiterhin gutes Durchstanzen eines Oberblechs aus hochfestem Stahl gewährleistet werden.

In einer weiterhin bevorzugten Ausführungsform weist die Nietfußinnenfase einen Fasenwinkel von ca. 45° auf. Ein solcher Fasenwinkel hat sich insbesondere hinsichtlich des Aufspreizverhaltens des Nietfußes als vorteilhaft gezeigt.

Der erfindungsgemäße Stanzniet kann in einer weiterhin bevorzugten Ausführungsform dadurch gekennzeichnet sein, dass der Auslaufradius der Nietfußinnenfase, d.h. der Innenradius des Nietfußes im Bereich der Nietfußstirnfläche zwischen 80 % und 90 % und vorzugsweise 85 % des Nietfußaußenradius beträgt. Durch diese Ausgestaltung kann wiederum das Aufspreizverhalten des Nietfußes positiv beeinflusst werden.

Weiterhin bevorzugt ist die Länge beziehungsweise Lage der Nietfußinnenfase so gewählt, dass die Nietfußstirnfläche im äußeren Drittel des Nietfußquerschnitts positioniert ist. Diese Ausgestaltung kann einen positiven Einfluss sowohl auf das Stanz- als auch auf das Aufspreizverhalten des Stanzniets haben.

Die erfindungsgemäße Stanznietgeometrie kann besonders bevorzugt zur Ausbildung eines Halbhohlstanzniets verwendet werden; sie eignet sich jedoch auch für einen Hohlstanzniet.

Die Erfindung wird nachfolgend anhand eines in den Zeichnungen dargestellten Ausführungsbeispiels näher erläutert.

In der Zeichnung zeigt die
- Figur 1:: einen erfindungsgemäßen Halbhohlstanzniet.

Anhand der Figur 1 wird ein konkretes Ausführungsbeispiel eines erfindungsgemäß ausgebildeten Halbhohlstanzniets beschrieben.

Der erfindungsgemäße Stanzniet besteht aus einem Nietkopf 1 sowie einem Nietschaft 2, der hohlzylindrisch ausgeführt ist und dadurch einen im Querschnitt ringförmigen Nietfuß ausbildet. Der Übergang zwischen dem Nietkopf 1, der einen Durchmesser d₁ von 7,75 ± 0,1 mm aufweist, zu dem Nietschaft 2, der einen Außendurchmesser d₂ von 5,2 ± 0,1 mm aufweist, ist durch eine Unterkopfphase 3 mit einem Phasenwinkel α von 20° ± 2° gekennzeichnet. Der Übergang zwischen der Unterkopfphase sowie dem Nietschaft ist durch einen äußerst kleinen Radius R₁ von 0,65 mm gekennzeichnet. Der Innendurchmesser d₃ des Nietschafts 2 beträgt im vorliegenden Fall 2,9 ± 0,1 mm, so dass sich eine Nietfußwandstärke ergibt, die - unter Berücksichtigung der entsprechenden Nennmaße - in etwa 44 % des Nietfußaußenradius (der Nietfußaußenradius entspricht der Hälfte des Nietschaftaußendurchmessers, folglich d₂/2) entspricht.

Der Nietfuß weist weiterhin eine Nietfußinnenfase 4 mit einem Fasenwinkel β von 45° auf. In Verbindung mit einer Nietfußaußenfase, die ebenfalls einen Phasenwinkel (δ) von 45° aufweist, bildet die Nietfußinnenfase eine Nietfußstirnfläche 5 aus, die im vorliegenden Fall eine Breite von 0,1 mm und folglich von ca. 8,7 % der Nietfußwandstärke (entspricht der halben Differenz aus Nietschaftaußendurchmesser d₂ und Nietschaftinnendurchmesser d₃) aufweist.

Die Lage der Nietfußstirnfläche wird durch den Auslaufdurchmesser d₄ der Nietfußinnenfase definiert. Dieser beträgt vorliegend 4,4 ± 0,1 mm, was in etwas 85 % des Nietfußaußendurchmessers entspricht. Dadurch wird eine Lage der Nietfußstirnfläche im äußeren Drittel des Nietfußquerschnitts erreicht.

### Die weiterhin in der Fig. 1 bezeichneten Maße betragen:

Gesamtlänge des Niets I₁: 6,5 ± 0,15 mm;
Zentrale Stärke des Nietkopfs I₂: 1 ± 0,15 mm;
Randstärke des Nietkopfs I₃: 0,4 ± 0,15 mm;
Höhe der Nietfußaußenfase I₄: max. 0,3 mm;
Hauptradius im Bohrungsgrund des Nietschafts R₂: 5 mm;
Übergangsradius im Bohrungsgrund des Nietschafts R₃: 0,3 mm.

## Patentansprüche

1. Stanzniet mit einem Nietkopf (1) und einem zumindest teilweise hohlzylindrischen Nietschaft (2), der einen im Querschnitt ringförmigen Nietfuß ausbildet, der durch die Ausbildung einer Nietfußinnenfase (4) in eine Nietfußstirnfläche (5) ausläuft, und bei dem der Übergang von dem Nietschaft (2) in den Nietkopf (1) durch einen Unterkopfradius (R₁) und eine Unterkopffase (3) ausgebildet ist, **dadurch gekennzeichnet, dass** die Nietfußwandstärke mindestens 40% und vorzugsweise zwischen 40% und 50% des Nietfußaußenradius und die Breite der Nietfußstirnfläche (5) maximal 10% und vorzugsweise zwischen 8% und 9% der Nietfußwandstärke beträgt.

2. Stanzniet gemäß Anspruch 1, **dadurch gekennzeichnet, dass** die Nietfußinnenfase (4) einen Fasenwinkel (β) von ca. 45° aufweist.

3. Stanzniet gemäß Anspruch 1 oder 2, **dadurch gekennzeichnet, dass** der Auslaufradius der Nietfußinnenfase (4) zwischen 80% und 90% und vorzugsweise 85% des Nietfußaußenradius entspricht.

4. Stanzniet gemäß einem der vorhergehenden Ansprüche, **dadurch gekennzeichnet, dass** die Nietfußstirnfläche (5) im äußeren Drittel des Nietfußquerschnitts angeordnet ist.

5. Stanzniet gemäß einem der vorhergehenden Ansprüche, **dadurch gekennzeichnet, dass** er als Halbhohlstanzniet ausgebildet ist.
